# EUROPÄISCHE PATENTSCHRIFT

(11) **EP 0 436 884 B1**
(45) Veröffentlichungstag und Bekanntmachung des Hinweises auf die Patenterteilung: **05.02.1997**
(21) Anmeldenummer: 90124554.8
(22) Anmeldetag: 18.12.1990
(51) Int. Cl.: G06K 9/32

(54) **Verfahren zur Eingabe von Abtastzonen-Koordinaten bei automatischen Leseeinrichtungen für Briefe, Formulare o.ä.**
Method for entering scan-zone coordinates in automatic reading systems for letters, forms etc.
Méthode d'entrée de coordinées de zones de balayage pour des systèmes de lecture automatique de lettres, formulaires etc.

(30) Priorität: 27.12.1989 DE 3943073
(43) Veröffentlichungstag der Anmeldung: 17.07.1991
(73) Patentinhaber: Licentia Patent-Verwaltungs-GmbH, 60596 Frankfurt (DE)
(72) Erfinder: Hänsel, Karl-Günther, Dipl.-Phys., D-7750 Konstanz (DE)
(74) Vertreter: Vogl, Leo, Dipl.-Ing.

(56) Entgegenhaltungen:
- US-A- 4 716 542
- PATTERN RECOGNITION. Bd. 20, Nr. 2, 1987, US Seiten 213 - 227; P.-S. YEH ET AL. : 'address location on envelopes'
- PATENT ABSTRACTS OF JAPAN vol. 10, no. 382 (P-529)20. Dezember 1986 & JP-A-61 117 390

## Beschreibung

Die vorliegende Erfindung betrifft ein Verfahren und eine Vorrichtung zur Eingabe von Abtastzonen-Koordinaten bei automatischen Anschriften- und Formularlesern, wie sie z.B. in Briefverteilanlagen Verwendung finden.

Zur zuverlässigen und schnellen Verarbeitung von Briefen, Formularen, Belegen etc. (im folgenden Sendungen genannt), werden in zunehmendem Maße Anlagen eingesetzt, in denen auf den Sendungen aufgebrachte Zeichen automatisch durch Lesegeräte abgetastet und interpretiert werden. Bei der ersten Stufe der Zeichenerkennung muß bei der sogenannten Bildvorbereitung der Bereich der Sendung, der vermutlich maschinenlesbare Zeichen enthält, bestimmt werden; bei Briefsendungen ist dies der sogenannte Adreßblock.

Während die Koordinaten dieses Bereichs bei allgemeiner Post vorab nicht genauer spezifiziert werden können, sind sie bei Großauflieferern häufig für eine große Menge von Sendungen festgelegt, so daß eine Festeinstellung des Lesefensters und damit eine schnellere Bearbeitung durch die Leseelektronik möglich ist.

Die Einstellung des Lesefensters erfolgte bisher durch manuelle Vermessung der Adreßfelder mit einem Lineal und anschließende Eingabe der Werte in den Steuerrechner des Lesers. Hiermit verbundene Nachteile sind insbesondere Umständlichkeit und Fehler bei der Messung und bei der Übertragung der abgemessenen Werte in den Steuerrechner.

Aus der JP 61173390 ist bereits ein Verfahren zur Eingabe von Abtastzonen-Koordinaten für Briefe bekannt, bei dem die Steuerung einer automatischen Leseeinrichtung elektrisch mit Mitteln zur Digitalisierung der Koordinatenwerte vorgegebener Punkte auf einer Fläche verbunden ist, über den eine Sendung auf besagte Fläche gelegt wird und ein Lichtstrahl auf die Abtastzone gerichtet wird, wobei die der Position des Lichtflecks entsprechenden Koordinaten erfaßt werden.

Aus der US-A 4176542 ist ein Digitalisierungstablett bekannt, bei dem auf der Eingabefläche Eingabetasten nachgebildet sind und durch die wie mit einer Tastatur Parameter, Befehle und Kommandos eingegeben werden können.

Aufgabe der vorliegenden Erfindung ist die Verbesserung des Standes der Technik. Insbesondere soll ein Verfahren und eine Vorrichtung angegeben werden, mit der eine einfache, schnelle und korrekte Eingabe der Abtastzonen-Koordinaten und die Speicherung und der Wiederabruf bereits gespeicherter Koordinaten sowie die Eingabe weiterer für zu lesende Sendungen charakteristische Parameter möglich ist.

Diese Aufgabe wird erfindungsgemäß durch die Merkmale der unabhängigen Patentansprüche 1,2,4 und 5 gelöst. Weitere vorteilhafte Ausführungen der Erfindung sind den Unteransprüchen zu entnehmen.

Im folgenden werden Ausführungsbeispiele der Erfindung anhand von Zeichnungen genauer erläutert.

Im einzelnen zeigt:
- Figur 1 eine schematische Darstellung der mechanischen Integration einer erfindungsgemäßen Vorrichtung zur Eingabe von Abtastzonen-Koordinaten in einer automatischen Briefleseeinrichtung;
- Figur 2 eine schematische Darstellung des Bedienfeld-Layouts einer erfindungsgemäßen Vorrichtung;
- Figur 3 Ablaufdiagramme, die die Eingabe und Speicherung bzw. Löschung von Koordinaten und weiteren Sendungsparametern illustrieren;
- Figur 4 eine schematische Darstellung eines weiteren Bedienfeld-Layouts einer erfindungsgemäßen Vorrichtung.

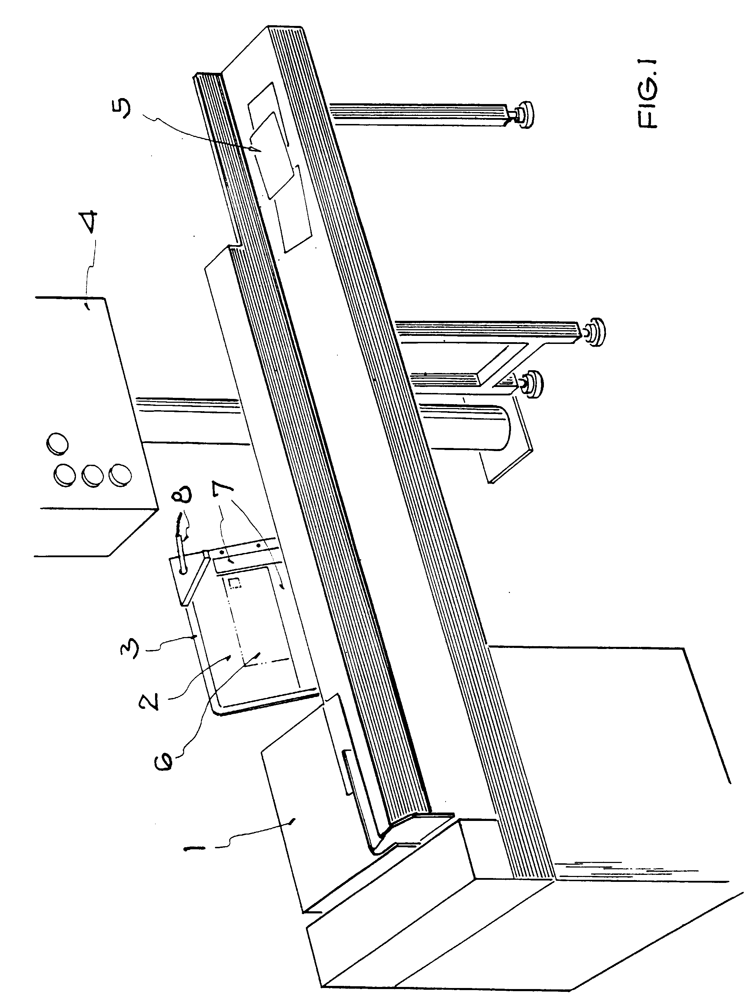

Figur 1 veranschaulicht die Anordnung einer erfindungsgemäßen Vorrichtung am Stoffeingabe-Modul 1 eines automatischen Briefanschriftenlesers. Hierbei sind, um eine leichte Benutzung zu ermöglichen, die Digitalisierungsmittel als Digitalisierungstablett 2 ausgebildet und in einem Montagerahmen 3 nahe dem Bedienpult 4 und den einzuspeisenden Sendungen 5 mit einer Schräge gegenüber der Vertikalen angeordnet.

Eine Sendung 6, für die die Abtast-Koordinaten eingegeben werden sollen, wird zunächst auf das Tablett 2 gelegt; ihre Position auf dem Tablett wird durch die rechtwinkligen Anschlagwinkel 7 fixiert, so daß ein fester Bezug für die Koordinaten gegeben ist. Die Eingabe der Abtastzonen-Koordinaten erfolgt über einen Markierungsstift, der elektronisch mit dem Tablett 2 verbunden ist und durch elektromagnetische, akustische oder mechanische Impulse durch die Sendung hindurch eine Markierung von Punkten auf dem Tablett ermöglicht. Die X-Y-Koordinaten der markierten Punkte auf der Fläche werden, z.B. über eine serielle Schnittstelle, an den Steuerrechner der Anlage weitergegeben, der veranlaßt, daß bei der optischen Abtastung der Sendungen im Anschriftenleser die Adreßfeldsuche auf den markierten Bereich beschränkt wird.

Die Adreß-Koordinaten können mit verschiedenen Modi eingegeben werden.
- Einpunkt-Eingabe:
   Hierbei wird ein Punkt markiert; die horizontale bzw. vertikale Begrenzung der Abtastzone erstreckt sich von dem markierten Punkt nach rechts bzw. unten.
- Zweipunkt-Eingabe:
   Die Begrenzung der Abtastzone erstreckt sich hier horizontal und vertikal zwischen dem Punkt links oben und dem Punkt rechts unten.
- Drei- bis Sechspunkt-Eingabe:
   Hierbei kann eine Schräglage der Adresse berücksichtigt werden.

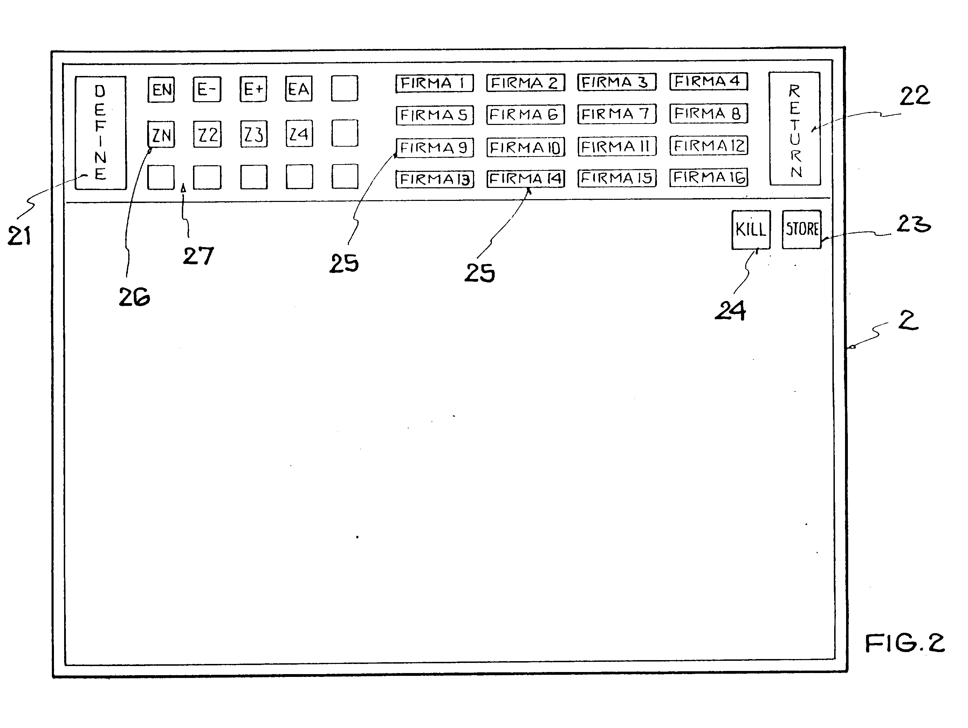

Figur 2 illustriert eine Ausführungsform der Erfindung, bei der durch eine über das Tablett gelegte transparente Folie mit gezeichneten Tastenfeldern ein Menubereich realisiert werden kann. Durch Antippen der Tasten 21, 22, 23 und 24 können Steuerbefehle "Define", "Return", "Store" und "Kill" an den Rechner abgesetzt werden, während mit anderen Tasten, z.B. 25 oder 26, Parameter, wie z.B. der Name eines Großauflieferers oder die Empfindlichkeit der Leseelektronik (EN = Normal, E- = Schwächer, E+ = Stärker, EA = Automatisch) eingegeben werden können.

Die Anzahl der im Adreßblock zu interpretierenden Zeilen kann durch die Tasten 27 eingestellt werden (ZN = normal, Z2 = 2 Zeilen usw.; Numerierung erfolgt von unten nach oben).

Über den Menubereich können weiterhin Angaben über Datentypen für statistische Zwecke, über Postsorten, wie Einschreiben oder Einschreiben mit Rückbestätigung, über Eigenschaften der von verwendeten Transparentfenstern (stark oder schwach reflektierend) oder über den erforderlichen Einsatz von Farbfiltern wegen Hintergrundstörungen an die Anlagensteuerung gegeben werden.

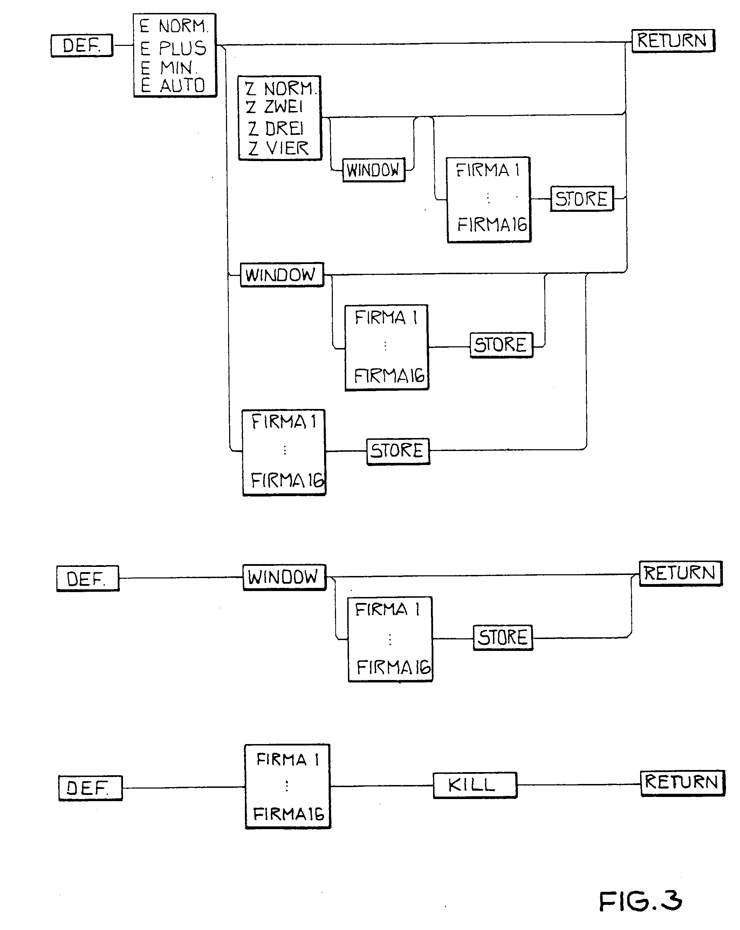

Figur 3 zeigt die Eingabe und Speicherung verschiedener Leseoptionen, wobei die jeweils gewählten Optionen nach Eingabe eines Firmennamens direkt in der Parameterdatei der Anlagensteuerung unter diesem Namen abgespeichert werden. Zu einem späteren Zeitpunkt lassen sich diese Parameter durch Antippen der betreffenden Taste auf dem Menu wieder aufrufen und steuern den Abtastvorgang der Lesevorrichtung. Ein Speichervorgang nach Figur 3 wird dabei durch den Befehl "Define" eingeleitet, worauf eine Sequenz von Optionen angegeben wird und durch den Befehl "Store" gespeichert und mit "Return" beendet wird. Gespeicherte Optionen können über die Eingabe der Sequenz "Define" Option, und "Kill", "Return" gelöscht werden.

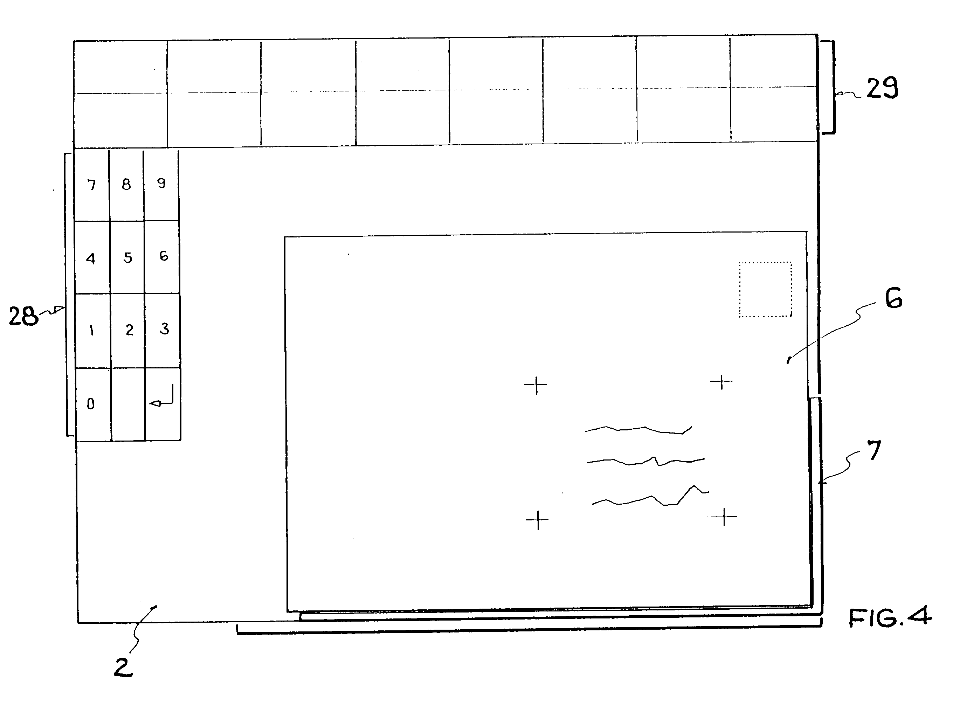

Figur 4 illustriert eine weitere Ausführungsform der Erfindung, bei der über das im Menubereich realisierte Tastenfeld 28 auch eine Eingabe von Ziffern in die Anlagensteuerung möglich ist, während das Tastenfeld 29 Befehlsfunktionen enthält.

## Patentansprüche

1. Verfahren zur Eingabe von Abtastzonen-Koordinaten bei automatischen _{,} Leseeinrichtungen für Sendungen, wie Briefe, Formulare o.ä., bei dem eine Steuerung der automatischen Leseeinrichtung elektrisch mit Mitteln zur Digitalisierung der Koordinaten vorgegebener Punkte auf einer Fläche verbunden ist und eine Sendung auf besagte Fläche gelegt wird und den Abtastzonen-Koordinaten zugeordnete Signale der Steuerung der automatischen Leseeinrichtung zugeführt werden,
dadurch gekennzeichnet,
daß die Eingabe der Abtastzonen-Koordinaten und eine Eingabe von für die zu lesende Sendung charakteristischen Parametern sowie von Steuerbefehlen in die Leseeinrichtung über ein Digitalisierungstablett erfolgen, wobei eine Speicherung solcher Eingaben vorgenommen wird und
daß zur Eingabe der Abtastzonen-Koordinaten ein Punkt auf der Fläche markiert wird und die horizontale bzw. vertikale Begrenzung der Abtastzone sich von dem markierten Punkt nach rechts bzw. unten bis zur Begrenzung der Sendung erstreckt.

2. Verfahren zur Eingabe von Abtastzonen-Koordinaten bei automatischen Leseeinrichtungen für Sendungen, wie Briefe, Formulare o.ä., bei dem eine Steuerung der automatischen Leseeinrichtung elektrisch mit Mitteln zur Digitalisierung der Koordinaten vorgegebener Punkte auf einer Fläche verbunden ist und eine Sendung auf besagte Fläche gelegt wird und den Abtastzonen-Koordinaten zugeordnete Signale der Steuerung der automatischen Leseeinrichtung zugeführt werden,
dadurch gekennzeichnet,
daß die Eingabe der Abtastzonen-Koordinaten und eine Eingabe von für die zu lesende Sendung charakteristischen Parametern sowie von Steuerbefehlen in die Leseeinrichtung über ein Digitalisierungstablett erfolgen, wobei eine Speicherung solcher Eingaben vorgenommen wird und
daß zur Eingabe der Abtastzonen-Koordinaten zwei Punkte auf der Fläche markiert werden und die Begrenzung der Abtastzone sich horizontal und vertikal zwischen dem Punkt links oben und dem Punkt rechts unten oder zwischen dem Punkt rechts oben und dem Punkt links unten erstreckt.

3. Verfahren nach Anspruch 1 oder 2, dadurch gekennzeichnet, daß die Begrenzung der Abtastzone durch die Markierung von drei bis sechs Punkten auf der Fläche charakterisiert wird.

4. Vorrichtung zur Eingabe von Abtastzonen-Koordinaten bei automatischen Leseeinrichtungen für Sendungen, wie Briefe, Formulare o.ä. mit Mitteln zur Digitalisierung der Koordinaten vorgegebener Punkte auf einer Fläche, auf die die Sendungen gelegt werden, wobei die Mittel elektrisch mit der automatischen Leseeinrichtung verbunden sind, und wobei an die Leseeinrichtung Signale, die diesen Abtastzonen-Koordinaten entsprechen, weitergegeben werden,
dadurch gekennzeichnet,
daß als Mittel zur Digitalisierung ein Digitalisierungstablett mit einem Markierungsstift vorgesehen ist und
daß am Digitalisierungstablett aktive Bereiche als Tastatur vorgesehen sind, mit denen Steuerbefehle und für die zu lesende Sendung charakteristische Parameter in die Steuerung der automatischen Leseeinrichtung eingegeben und ihre Speicherung veranlaßt werden kann, wobei zur Eingabe der Abtastzonen-Koordinaten ein Punkt auf der Fläche markiert wird und die horizontale bzw. vertikale Begrenzung der Abtastzone sich von dem markierten Punkt nach rechts bzw. unten bis zur Begrenzung der Sendung erstreckt.

5. Vorrichtung zur Eingabe von Abtastzonen-Koordinaten bei automatischen Leseeinrichtungen für Sendungen, wie Briefe, Formulare o.ä. mit Mitteln zur Digitalisierung der Koordinaten vorgegebener Punkte auf einer Fläche, auf die die Sendungen gelegt werden, wobei die Mittel elektrisch mit der automatischen Leseeinrichtung verbunden sind, und wobei an die Leseeinrichtung Signale, die diesen Abtastzonen-Koordinaten entsprechen, weitergegeben werden,
dadurch gekennzeichnet,
daß als Mittel zur Digitalisierung ein Digitalisierungstablett mit einem Markierungsstift vorgesehen ist und
daß am Digitalisierungstablett aktive Bereiche als Tastatur vorgesehen sind, mit denen Steuerbefehle und für die zu lesende Sendung charakteristische Parameter in die Steuerung der automatischen Leseeinrichtung eingegeben und ggf. ihre Speicherung veranlaßt werden kann, wobei zur Eingabe der Abtastzonen-Koordinaten zwei Punkte auf der Fläche markiert werden und die Begrenzung der Abtastzone sich horizontal und vertikal zwischen dem Punkt links oben und dem Punkt rechts unten oder zwischen dem Punkt rechts oben und dem Punkt links unten erstreckt.

6. Vorrichtung nach Anspruch 4 oder 5, dadurch gekennzeichnet, daß die Begrenzung der Abtastzone durch die Markierung von drei bis sechs Punkten auf der Fläche charakterisiert wird.

## Claims

1. Method for entering scanning zone coordinates in automatic reading devices for mail, such as letters, forms or the like, in which method a controller of the automatic reading device is electrically connected to means for digitizing the coordinates of prescribed points on a surface, and an item of mail is laid on the said surface and signals assigned to the scanning zone coordinates are fed to the controller of the automatic reading device, characterized in that the entering of the scanning zone coordinates and entering of parameters which are characteristic of the item of mail to be read as well as of control instructions into the reading device take place by means of a digitizing tablet, such entries being stored, and in that, in order to enter the scanning zone coordinates, a point on the surface is marked and the horizontal and vertical delimitation of the scanning zone extends from the marked point to the right or downwards as far as the delimitation of the item of mail.

2. Method for entering scanning zone coordinates in automatic reading devices for items of mail, such as letters, forms or the like, in which method a controller of the automatic reading device is electrically connected to means for digitizing the coordinates of prescribed points on a surface, and an item of mail is laid on the said surface and signals assigned to the scanning zones are fed to the controller of the automatic reading device, characterized in that the entering of the scanning zone coordinates and entering of parameters which are characteristic of the item of mail to be read as well as of control instructions into the reading device take place by means of a digitizing tablet, such entries being stored, and in that, in order to input the scanning zone coordinates, two points are marked on the surface and the delimitation of the scanning zone extends horizontally and vertically between the point on the left at the top and the point on the right at the bottom or between the point on the right at the top and the point on the left at the bottom.

3. Method according to Claim 1 or 2, characterized in that the delimitation of the scanning zone is characterized by the marking of three to six points on the surface.

4. Device for entering scanning zone coordinates in automatic reading devices for items of mail, such as letters, forms or the like, having means for digitizing the coordinates of prescribed points on a surface onto which the items of mail are laid, the means being electrically connected to the automatic reading device and signals which correspond to these scanning zone coordinates being passed on to the reading device, characterized in that a digitizing tablet with a marking pen is provided as means for digitization, and in that active areas are provided as a keyboard on the digitizing tablet, with which areas control instructions and parameters which are characteristic of the item of mail to be read can be entered into the controller of the automatic reading device and their storage can be brought about, a point on the surface being marked for the entering of the scanning zone coordinates and the horizontal and vertical delimitation of the scanning zone extending from the marked point to the right or downwards as far as the delimitation of the item of mail.

5. Device for entering scanning zone coordinates in automatic reading devices for items of mail, such as letters, forms or the like, having means for digitizing the coordinates of prescribed points on a surface, onto which the items of mail are laid, the means being electrically connected to the automatic reading device and signals which correspond to these scanning zone coordinates being passed onto the reading device, characterized in that a digitizing tablet with a marking pen is provided as means for digitization, and in that active areas are provided as keyboard on the digitizing tablet, with which areas control instructions and parameters which are characteristic of the item of mail to be read can be entered into the controller of the automatic reading device and, if appropriate, their storage can be brought about, two points on the surface being marked for entering the scanning zone coordinates and the limitation of the scanning zone extending horizontally and vertically between the point on the left at the top and the point on the right at the bottom or between the point on the right at the top and the point on the left at the bottom.

6. Device according to Claim 4 or 5, characterized in that the delimitation of the scanning zone is characterised by the marking of three to six points on the surface.

## Revendications

1. Procédé d'introduction de coordonnées de zones d'analyse dans des dispositifs automatiques de lecture pour des envois, tels que lettres, formulaires, ou autres, dans lequel une commande du dispositif automatique de lecture est reliée électriquement à des moyens de numérisation des coordonnées de points prédéterminés sur une surface et un envoi est placé sur ladite surface et les signaux associés de coordonnées de zones d'analyse sont délivrés à la commande du dispositif automatique de lecture, caractérisé en ce que l'introduction des coordonnées de zones d'analyse et une introduction de paramètres caractéristiques pour l'envoi à lire ainsi que d'instructions de commande dans le dispositif de lecture s'effectuent par une tablette de numérisation, une mémorisation de ces introductions étant effectuée et en ce qu'en vue de l'introduction des coordonnées de zones d'analyse, un point est marqué sur la surface et la limitation horizontale ou verticale de la zone d'analyse s'étend depuis le point marqué vers la droite ou vers le bas jusqu'à la délimitation de l'envoi.

2. Procédé d'introduction de coordonnées de zones d'analyse dans des dispositifs automatiques de lecture pour des envois, tels que des lettres, formulaires ou autres, dans lequel une commande du dispositif automatique de lecture est reliée électriquement à des moyens de numérisation de coordonnées de points prédéterminés sur une surface et un envoi est placé sur ladite surface et des signaux associés à des coordonnées de zones d'analyse sont délivrés à la commande du dispositif automatique de lecture, caractérisé en ce que l'introduction des coordonnées de zones d'analyse et une introduction de paramètres caractéristiques pour l'envoi à lire ainsi que d'instructions de commande dans le dispositif de lecture s'effectuent par l'intermédiaire d'une tablette de numérisation, une mémorisation de ces introductions étant effectuée et en ce qu'en vue de l'introduction des coordonnées de zones d'analyse, deux points sont marqués sur la surface et la délimitation de la zone d'analyse s'étend horizontalement et verticalement entre le point en haut à gauche et le point en bas à droite ou entre le point en haut à droite et le point en bas à gauche.

3. Dispositif selon la revendication 1 ou 2, caractérisé en ce que la délimitation de la zone d'analyse est caractérisée par le marquage de trois à six points sur la surface.

4. Dispositif d'introduction de coordonnées de zones d'analyse dans des dispositifs automatiques de lecture pour des envois, tels que des lettres, formulaires ou autres, équipé de moyens de numérisation des coordonnées de points prédéterminés sur une surface sur lesquels sont placés les envois, les moyens étant reliés électriquement au dispositif automatique de lecture, et des signaux étant restitués au dispositif de lecture, qui correspondent aux coordonnées de ces zones d'analyse, caractérisé en ce qu'en tant que moyens de numérisation, est prévue une tablette de numérisation équipée d'une tige de marquage et en ce que sur la tablette de numérisation sont prévues des zones actives sous la forme d'un clavier, avec lesquelles des instructions de commande et des paramètres caractéristiques pour l'envoi à lire sont introduits dans la commande du dispositif automatique de lecture et leur mémorisation peut être effectuée, en vue de l'introduction des coordonnées de zones d'analyse un point étant marqué sur la surface et la délimitation horizontale ou verticale de la zone d'analyse s'étendant depuis le point marqué vers la droite ou vers le bas jusqu'à la délimitation de l'envoi.

5. Dispositif d'introduction de coordonnées de zones d'analyse dans des dispositifs automatiques de lecture pour des envois, tels que des lettres, formulaires ou autres, équipé de moyens de numérisation des coordonnées de points prédéterminés sur une surface, sur laquelle sont placés les envois, lesdits moyens étant reliés électriquement au dispositif automatique de lecture, et des signaux étant restitués au dispositif de lecture, qui correspondent aux coordonnées de ces zones d'analyse, caractérisé en ce qu'en tant que moyens de numérisation est prévue une tablette de numérisation équipée d'une tige de marquage et en ce que sur la tablette de numérisation, des plages actives sont prévues sous la forme d'un clavier, avec lesquelles des instructions de commande et des paramètres caractéristiques pour l'envoi à lire sont introduits dans la commande du dispositif automatique de lecture et éventuellement leur mémorisation peut être effectuée, en vue de l'introduction des coordonnées de zones d'analyse, deux points étant marqués sur la surface et la délimitation de la zone d'analyse s'étendant horizontalement et verticalement entre le point en haut à gauche et le point en bas à droite ou entre le point en haut à droite et le point en bas à gauche.

6. Dispositif selon la revendication 4 ou 5, caractérisé en ce que la délimitation de la zone d'analyse est caractérisée par le marquage de trois à six points sur la surface.
